(19) Europäisches Patentamt
European Patent Office
Office européen des brevets

(11) **EP 1 426 410 B1**

(12) **EUROPEAN PATENT SPECIFICATION**

(45) Date of publication and mention
of the grant of the patent:
**22.12.2010 Bulletin 2010/51**

(51) Int Cl.:
***C08L 33/14*** (2006.01)  ***C08L 101/00*** (2006.01)
***C08L 27/06*** (2006.01)  ***C08L 33/12*** (2006.01)
***C08L 55/02*** (2006.01)

(21) Application number: **02733393.9**

(22) Date of filing: **07.06.2002**

(86) International application number:
**PCT/JP2002/005660**

(87) International publication number:
**WO 2002/100943 (19.12.2002 Gazette 2002/51)**

(54) **PLASTICIZED THERMOPLASTIC RESIN COMPOSITION OF GOOD FLEXIBILITY**

WEICHMACHER ENTHALTENDE THERMOPLASTICHE HARZZUSAMMENSETZUNG MIT GUTER FLEXIBILITÄT

COMPOSITION DE RESINE THERMOPLASTIQUE PLASTIFIEE A BONNE FLEXIBILITE

(84) Designated Contracting States:
**AT BE CH CY DE DK ES FI FR GB GR IE IT LI LU MC NL PT SE TR**

(30) Priority: **12.06.2001 JP 2001177378**

(43) Date of publication of application:
**09.06.2004 Bulletin 2004/24**

(73) Proprietor: **BASF CORPORATION**
**Florham Park, NJ 07932 (US)**

(72) Inventors:
• **KAAI, Michihiro,**
**c/o TOAGOSEI CO. LTD.**
**Nagoya-shi,**
**Aichi 455-0027 (JP)**

• **FURUTA, Madoka,**
**c/o TOAGOSEI CO. LTD.**
**Nagoya-shi,**
**Aichi 455-0027 (JP)**

(74) Representative: **Ruschke, Hans Edvard et al**
**RUSCHKE HARTMANN MADGWICK & SEIDE**
**Patent- und Rechtsanwälte**
**Postfach 86 06 29**
**81633 München (DE)**

(56) References cited:
**EP-A1- 0 156 170**    **WO-A1-01/83619**
**JP-A- 59 080 468**    **JP-A- 62 277 457**
**JP-A- 2000 002 876**    **JP-A- 2001 016 997**

**Description**

Technical Field

The present invention relates to a thermoplastic resin composition which has good flexibility. In particular, the invention relates to improvement of composition which comprises a resin, for example, polymethyl methacrylate resin, poly(vinyl chloride) resin and acrylonitrile-butadiene-styrene copolymer resin (hereinafter referred to as "ABS resin").

Background Art

When a composition containing a common plasticizer such as dioctyl phthalate (DOP) is molded, problems can occur for example, decrease in the elasticity and flexibility of the moldings or surface tackiness of the molded products. In view of the problems, improvements to the compositions have been disclosed as shown below.

Japanese Laid-Open Patent Publication 55-160045 discloses a composition for improving processability of poly(vinyl chloride) resin. The composition comprises 2 kinds of polymer components. The first polymer component is obtained by polymerization reaction within a mixture which contains: (meth)acrylate at 0.1-10 wt.%; another alkyl acrylate at 20-99.9 wt.%; and vinyl monomer capable of copolymerization with these at 79.9-1 wt.%. The (meth)acrylate has glycidyl group, hydroxy group or alkoxy group. The second polymer component is obtained by polymerization reaction within a mixture which contains: methyl methacrylate at 50-100 wt.%; and another vinyl monomer capable of copolymerization with the methyl methacrylate.

A thermoplastic resin in which a specific copolymer is mixed into polycarbonate resin is also known (Japanese Laid-Open Patent Publication 2000-178432). The specific copolymer is obtained by carrying out copolymerization reaction in a component comprising: a first (meth)acrylate ester at 0.1-10 wt.%; a second (meth)acrylate ester at 5-90 wt.%; aromatic vinyl compound at 5-70 wt.%; and another component capable of copolymerization with these at 0-50 wt.%. The first (meth)acrylate ester has epoxy group, hydroxyl group or alkoxy group.

However in the disclosure above, the composition used for improving processability of poly(vinyl chloride) resin did not have sufficient compatibility with the poly(vinyl chloride) resin. In addition, in the above described thermoplastic resin composition, the compatibility was insufficient between the polycarbonate resin and the specific copolymer added to it. Accordingly, the use of the composition was limited in some applications due to low plasticizing effect and inferior flexibility.

The present invention was made in view of the above described problems in the prior art. An object of the invention is to provide a thermoplastic resin composition which has high plasticizing effect and good flexibility.

Disclosure of the Invention

In order to achieve the above described object, the composition and the product obtained from the composition comprises a polymer and a thermoplastic resin. The polymer contains a monomer unit represented by formulae (1) or (2) at 20 wt.% or more and another monomer unit at 80 wt.% or less.

$$CH_2=CHCOO(CH_2C(CH_3)HO)_m\text{-}R \qquad (1)$$

$$CH_2=C(CH_3)COO(CH_2C(CH_3)HO)_m\text{-}R \qquad (2)$$

In equations (1) and (2), m is 1, 2 or 3. R represents hydrogen atom or alkyl group having 1-4 carbons. Here, a combination of m=1 and R being hydrogen atom is excluded.

In one embodiment, the above described monomer has a low weight average molecular weight in a range between 500 and 10,000.

In one embodiment, the composition of the invention contains the polymer in an amount between 10 parts by weight and 200 parts by weight with respect to 100 parts by weight of the thermoplastic resin.

The thermoplastic resin is poly(vinyl chloride) resin, acrylonitrile-butadiene-styrene copolymer resin, or AXS resin. AXS resin is a resin obtained by copolymerization of: acrylonitrile; rubber component excluding polybutadiene; and styrene.

The thermoplastic resin composition has an elongation percentage larger than that of the thermoplastic resin, preferably by 30% or higher, more preferably by 50% or higher and further preferably by 70% or higher. The thermoplastic resin composition has an elongation percentage larger than that of a composition in which only the above described polymer was omitted from the components constituting the thermoplastic resin composition (hereinafter referred to as "composition without the polymer"), preferably by 30% or higher, more preferably 50% or higher and further preferably 70% or higher. The values "30%," "50%," and "70%" do not represent increase in the percentage of the elongation with respect to that of the thermoplastic resin or the composition without the polymer. It represents an absolute value of increase in the elongation percentage, calculated by subtracting the elongation value of either the thermoplastic resin or the elongation value of "the composition without the polymer" from the elongation of the thermoplastic resin composition.

Best Mode for Carrying out the Invention

Embodiments of the invention are described in detail below.

The thermoplastic resin composition comprises the specific polymer and the thermoplastic resin. The polymer comprises the first monomer unit and the second monomer unit distinguishable from the first monomer unit. In other words, the first monomer unit and the second monomer unit are units which form the polymer. The first monomer unit is represented by equations (1) or (2) shown below and is contained in the polymer at 20 wt.% or more. The second monomer unit is contained in the polymer at 80 wt.% or less.

$$CH_2=CHCOO(CH_2C(CH_3)HO)_m\text{-}R \qquad (1)$$

$$CH_2=C(CH_3)COO(CH_2C(CH_3)HO)_m\text{-}R \qquad (2)$$

In equations (1) and (2), m is 1, 2 or 3. R represents hydrogen atom or alkyl group having 1-4 carbons. Here, a combination of m=1 and R being hydrogen atom is excluded.

In equations (1) and (2), R is preferably an alkyl group having carbon number 1 to 4. In this case, the compatibility of the polymer and the resin is improved so that the plasticizing effect can be enhanced and the flexibility can be improved.

The polymer is obtained by polymerizing alkoxyalkyl (meth)acrylate, which is a monomer having a formula of one of (1) or (2), and another monomer. Examples of the monomer which can be a material for the polymer are shown below in detail for illustrative purpose. For a monomer having formula (1), methoxyisopropyl acrylate, ethoxyisopropyl acrylate and buthoxyisopropyl acrylate can be used. For a monomer having formula (2), methoxyisopropyl methacrylate, ethoxyisopropyl methacrylate and buthoxyisopropyl methacrylate can be used. Another monomer to be polymerized with alkoxyalkyl (meth)acrylate can be any monomer capable of copolymerization with a monomer represented by one of formulae (1) or (2). For example, methyl (meth)acrylate, ethyl (meth)acrylate, propyl (meth)acrylate, butyl (meth) acrylate, 2-ethylhexyl (meth)acrylate, cyclohexyl (meth)acrylate, (meth)acrylic acid, hydroxyethyl (meth)acrylate, hydroxypropyl (meth)acrylate, hydroxybutyl (meth)acrylate, glycidyl (meth)acrylate, vinyl acetate and styrene can be used. Through the specification, the term "(meth)acrylic" is a generic term which can include both acrylic and methacrylic.

The polymer contains the first monomer unit at 20 wt.% or more and the second monomer unit at 80 wt.% or less. If the first monomer unit is contained less than 20 wt.%, in other words, the second monomer unit exceeds 80 wt. %, a composition having high plasticizing effect and excellent flexibility cannot be obtained.

The weight average molecular weight of the polymer is preferably low in a range between 500 and 10,000. If the weight average molecular weight of the polymer exceeds 10,000, the plasticizing effect of the polymer tend to decrease. On the other hand, the low weight average molecular weight of the polymer less than 500 can result in difficulty in the production of the polymer.

The amount of the polymer contained within the composition is desirably in a range between 10 and 200 parts by weight with respect to 100 parts by weight of thermoplastic resin. If the content of the polymer is less than 10 parts by weight, the plasticizing effect by the polymer tends to decrease. On the other hand, if the content of the polymer exceeds 200 parts by weight, the obtained composition is too soft and shaping of the product can be difficult.

The viscosity of the polymer is preferably 100,000 cP or less, more preferably 50,000 cP or less and most preferably 20,000 cP or less as measured by B-type viscosity meter at 25°C. This is because sufficient plasticizing effect cannot be obtained in some cases when the viscosity is too high. While there is no limitation to the lower limit of the viscosity, the viscosity of polymers in general is 100 cP or more.

Preferably, the polymer has a glass transition temperature (Tg) of 0°C or less, more preferably -20°C or less and most preferably -30°C or less, as measured by differential scanning calorimetry (DSC). If the glass transition point exceeds 0°C, the plasticizing effect cannot be realized because the polymer can become too hard.

The polymer is obtained preferably by polymerization at a high temperature in a range between 180 and 350°C. By adjusting the polymerization temperature between 180 and 350°C, a polymer having relatively low molecular weight and excellent plasticizing effect is obtained without using polymerization initiator or chain transfer agent. A molded product of the composition in which the polymer is added has an excellent weathering resistance and the problems such as decrease in the strength and such as coloring can be alleviated. When the polymerization temperature is less than 180°C, polymerization initiator or chain transfer agent is necessary in the polymerization so that coloring can occur in the moldings and odor can be generated, as well as the weathering resistance can be inferior. If the polymerization temperature exceeds 350°C, degradation tends to be caused so that coloring in the shaped product can occur.

A preferable polymerization technique for producing the polymer is continuous bulk polymerization or solution polymerization. In particular, continuous polymerization using stirring tank reactor is preferred. Because the molecular weight distribution can be made small by polymerizing at a high temperature, a well-balanced polymer can be obtained in the aspect of the plasticizing effect and reduced surface tackiness of the molded product in which the polymer has been mixed. While the polymerization initiator may be used or may not be used, the concentration is preferably 1 wt.% or less when it is used.

A part of the polymers thus obtained have terminal double bond. The polymer having a terminal double bond has good compatibility when used as the plasticizer and is preferable because surface tackiness seldom occurs on the molded product with the plasticizer mixed in. The reason for this phenomenon is presumed that the terminal double bond of the polymer has some reaction with other component of the composition.

The proportion of the polymer having terminal double bond is preferably at 20 wt.% or more, and more preferably 40 wt.% or more. The proportion is calculated from: average molecular weight obtained from gel permeation chromatography (GPC); and the double bond concentration obtained from nuclear magnetic resonance spectroscopy (NMR). The average number of the terminal double bond per one molecule of polymer thus calculated (the total number of the terminal double bonds divided by the number of the polymer molecule) is referred to as terminal double bond index.

The above described polymer has plasticizing efficiency of preferably 30-150, more preferably 40-100, further preferably 40-90 and most preferably 40-80. Here, plasticizing efficiency represents an amount of polymer (by part by weight) which provides a Shore hardness (A or D) equivalent to that of the case where dioctyl phthalate (DOP) 50 wt.% is added to the resin to be plasticized. When the value of the plasticizing efficiency is high, the compatibility between the polymer and the resin can be inferior or, the strength and elongation percentage of the shaped product can be small. While small value of the plasticizing efficiency causes no problem, it is generally difficult to produce a polymer that has plasticizing efficiency of less than 30.

In the case where the polymer is used for plasticizing poly(vinyl chloride) resin, the weight average molecular weight of the polymer is preferably 500-4,000, more preferably 500-2,000, and further preferably 500-1,800 due to above described reason. A Q-value of the polymer provided by a method for water tolerance (hereinafter referred to as "Q-value") is preferably in a range between 11.5 and 16 and more preferably in a range between 12 and 16. The proportion of butyl acrylate unit with respect to the monomer unit which constitutes the polymer is preferably at 60 wt.% or more. Each value described above can cause effect to delay gelation of the composition when shaping the composition, and can cause effect to decrease the maximum torque applied to the composition.

The calculation of Q-value is described in detail below. A sample 0.5g is extracted into a conical beaker and is dissolved by adding 50ml acetone. Water is added once at a small amount until white cloud occurs in the dissolved solution. The Q-value is calculated from the equation shown below by using an amount of water (ml) added until generation of white cloud.

$$\text{Q-value}=50(\text{ml})*9.77/(\text{volume (ml) of mixture of acetone and water})+W(\text{ml})*23.5//(\text{volume (ml) of mixture of acetone and water})$$

Here, W represents an amount (ml) of water added until occurrence of white cloud. The numerical value "9.77" is a value of solubility parameter of acetone (SP value) and the numerical value "23.5" is SP value of water.

On the other hand, when the polymer is used for plasticizing ABS resin or acrylic resin Plastisol, the Q-value of the polymer is preferably between 13.5 and 16.

When the polymer is used for plasticizing a sealant, the weight average molecular weight of the polymer is preferably in a range between 500 and 10,000. The sealant which uses the polymer of the invention can be preferably used in the fields of architecture and civil engineering. Further, the polymer can also be used as processing aid of synthetic resin, extender or filler.

Through the specification, AXS resin is a resin in which polybutadiene, which is a rubber component of ABS resin, is replaced by another rubber component other than polybutadiene. In other words, AXS resin is a copolymerized resin of: acrylonitrile; a rubber component other than polybutadiene; and styrene. Examples of AXS resin are: ASA resin (also referred to as AAS resin) which contains acrylic rubber for the rubber component; ACS resin which contains chlorinated polyethylene for the rubber component; AES resin which contains ethylene-propylene rubber for the rubber component; a resin containing ethylene-vinylacetate copolymer for the rubber component; and AOS resin containing olefin rubber for the rubber component. Note that in the specification the rubber component of AXS resin is a concept which also includes mixed form of rubber components provided that the rubber components are other than polybutadiene.

The thermoplastic resin composition of the invention can contain additives such as rubber component, filler, antioxidant and ultraviolet ray absorbent. The examples of rubber component are: acrylic rubber; butadiene rubber; and styrene-butadiene copolymer rubber. The examples of the filler are: calcium carbonate; talc; clay; magnesium hydroxide; and glass fiber. The examples of the antioxidants are: phenol antioxidants such as 3-(3,5-di-t-butyl-4-hydroxyphenyl) propionate and bisphenol A; salicylic acid antioxidants such as 4-t-butyl phenyl salicylate; and benzophenone antioxidants such as 2-oxy-4-methoxybenzophenone.

The usable ultraviolet ray absorbents are: 2-(5-methyl-2-hydroxyphenyl)benzotriazol ultraviolet ray absorbent; oxalic acid ultraviolet ray absorbent such as 2-ethoxy-2'ethyl oxalic acid bisanhilide; and hindered amine ultraviolet ray absorbent such as bis(2,2,6,6-tetramethyl-4-piperazine)sebacate. Other additive can include: pigment; lubricant agent; processing aid; and forming agent.

The polymer can be formed only from any of the monomer units represented by formulae (1) or (2). Further, the polymer may be a combination of 2 or more of the monomer units represented by formulae (1) or (2), or it may be a polymer comprising similar types of monomer units in which values of m and R of the same formula were varied.

In addition, in some embodiments, a plurality of polymers having various plasticizing effects are prepared in advance and these polymers can be used by appropriately mixing them to provide the intended flexibility of the molded product.

## Claims

1. A thermoplastic resin composition comprising:

   a thermoplastic resin; and
   a polymer which contains a monomer unit represented by any of formulae (1) to (2) shown below at 20 parts by weight or more,

   $$CH2=CHCOO(CH2C(CH3)HO)m-R \qquad (1)$$

   $$CH2=C(CH3)COO(CH2C(CH3)HO)m-R \qquad (2)$$

   and another monomer unit at 80 parts by weight or less,

   wherein:

   in formulae (1) to (2), m is 1, 2 or 3, R is a hydrogen atom or an alkyl group having 1 to 4 carbon atoms, the combination in which m is 1 and R is a hydrogen atom is excluded; and
   the thermoplastic resin is selected from the group consisting of:

   a poly(vinyl chloride) resin; a acrylonitrile-butadiene-styrene copolymer resin; and a copolymerized resin (AXS resin) of acrylonitrile, a rubber other than polybutadiene and styrene.

2. A thermoplastic resin composition according to claim 1, wherein weight average molecular weight of the polymer is in a range between 500 and 10,000.

3. A thermoplastic resin composition according to claim 1 wherein the amount of the polymer contained in the composition is in the range between 10 and 200 parts by weight with respect to 100 parts by weight of the thermoplastic resin.

4. A thermoplastic resin composition according to any one of claims 1 to 3, wherein the thermoplastic resin is the poly(vinyl chloride) resin.

5. A thermoplastic resin composition according to any one of claims 1 to 3, wherein the thermoplastic resin is the acrylonitrile-butadiene-styrene copolymer resin.

6. A thermoplastic resin composition according to any one of claims 1 to 3, wherein the thermoplastic resin is the copolymerized resin (AXS resin) of acrylonitrile, a rubber other than polybutadiene and styrene.

7. A thermoplastic resin composition according to any one of claims 1 to 3, wherein the thermoplastic resin composition has an elongation percentage larger than that of the thermoplastic resin by 30% or higher; wherein the elongation percentage is the absolute value of increase in the elongation percentage calculated by subtracting the elongation value of either the thermoplastic resin or the composition without the polymer, from the elongation value of the thermoplastic resin composition.

8. A molded product obtained from the thermoplastic resin composition according to any one of claims 1 to 3.

**Patentansprüche**

1. Thermoplastische Harzzusammensetzung umfassend:

   ein thermoplastisches Harz; und
   ein Polymer, das eine Monomereinheit dargestellt durch eine der unten gezeigten Formeln (1) bis (2) mit 20 Gewichtsteilen oder mehr enthält,

$$CH2=CHCOO(CH2C(CH3)HO)m-R \qquad (1)$$

$$CH2=C(CH3)COO(CH2C(CH3)HO)m-R \qquad (2)$$

   und einer anderen Monomereinheit mit 80 Gewichtsteilen oder weniger,

   wobei:

   in Formel (1) bis (2), m 1, 2 oder 3 ist, R ein Wasserstoffatom oder eine Alkylgruppe mit 1 bis 4 Kohlenstoffatomen ist,
   die Kombination, in der m 1 und R ein Wasserstoffatom ist, ist ausgeschlossen; und
   das thermoplastische Harz wird ausgewählt aus der Gruppe bestehend aus:

   Poly(vinylchlorid)harz; Acrylnitril-Butadien-Styrol-Copolymerharz; und einem copolymerisierten Harz (AXS Harz) aus Acrylnitril, ein Kautschuk, der ein anderer als Polybutadien und Styrol ist.

2. Thermoplastische Harzzusammensetzung nach Anspruch 1, bei der das mittlere Molekulargewicht des Polymers im Bereich von 500 und 10000 liegt.

3. Thermoplastische Harzzusammensetzung nach Anspruch 1, bei der die Menge des Polymers, das in der Zusammensetzung enthalten ist, im Bereich von 10 bis 200 Gewichtsteilen bezogen auf 100 Gewichtsteile des thermoplastischen Harzes liegt.

4. Thermoplastische Harzzusammensetzung nach einem der Ansprüche 1 bis 3, bei der das thermoplastische Harz Poly(vinylchlorid)harz ist.

5. Thermoplastische Harzzusammensetzung nach einem der Ansprüche 1 bis 3, bei der das thermoplastische Harz Acrylnitril-Butadien-Styrol-Copolymerharz ist.

6. Thermoplastische Harzzusammensetzung nach einem der Ansprüche 1 bis 3, bei der das thermoplastische Harz ein copolymerisiertes Harz (AXS Harz) aus Acrylnitril, ein Kautschuk, der ein anderer als Polybutadien und Styrol ist, ist.

7. Thermoplastische Harzzusammensetzung nach einem der Ansprüche 1 bis 3, bei der die thermoplastische Harzzusammensetzung eine prozentuale Dehnung aufweist, die größer als 30% oder mehr als die des thermoplastischen Harzes ist; wobei die prozentuale Dehnung der absolute Wert des Anstiegs in der prozentualen Dehnung ist, die durch Subtraktion des Dehnungswertes entweder des thermoplastischen Harzes oder der Zusammensetzung ohne Polymer von dem Dehnungswert der thermoplastischen Harzzusammensetzung berechnet wird.

8. Formpressteil hergestellt unter Verwendung der thermoplastischen Harzzusammensetzung nach einem der Ansprüche 1 bis 3.

**Revendications**

1. Composition de résine thermoplastique comprenant :

   une résine thermoplastique ; et
   un polymère qui contient un motif monomère représenté par l'une quelconque des formules (1) et (2) présentées ci-dessous à 20 parties en poids ou plus,

   CH2=CHCOO(CH2C(CH3)HO)m-R          (1)

   CH2=C(CH3)COO(CH2C(CH3)HO)m-R          (2)

   et un autre motif monomère à 80 parties en poids ou moins,

   dans laquelle :

   dans les formules (1) et (2), m est 1, 2 ou 3, R est un atome d'hydrogène ou un groupe alkyle contenant 1 à 4 atomes de carbone,
   la combinaison dans laquelle m est 1 et R est un atome d'hydrogène est exclue ; et
   la résine thermoplastique est choisie dans le groupe comprenant :

   une résine de poly(chlorure de vinyle) ; une résine de copolymère d'acrylonitrile-butadiène-styrène ; et une résine copolymérisée (résine AXS) d'acrylonitrile, d'un caoutchouc différent du polybutadiène et de styrène.

2. Composition de résine thermoplastique selon la revendication 1, dans laquelle le poids moléculaire moyen en poids du polymère est dans un intervalle entre 500 et 10 000.

3. Composition de résine thermoplastique selon la revendication 1, dans laquelle la quantité du polymère contenue dans la composition est dans l'intervalle entre 10 et 200 parties en poids par rapport à 100 parties en poids de la résine thermoplastique.

4. Composition de résine thermoplastique selon l'une quelconque des revendications 1 à 3, dans laquelle la résine thermoplastique est la résine de poly(chlorure de vinyle).

5. Composition de résine thermoplastique selon l'une quelconque des revendications 1 à 3, dans laquelle la résine thermoplastique est la résine de copolymère d'acrylonitrile-butadiène-styrène.

6. Composition de résine thermoplastique selon l'une quelconque des revendications 1 à 3, dans laquelle la résine thermoplastique est la résine copolymérisée (résine AXS) d'acrylonitrile, d'un caoutchouc différent du polybutadiène et de styrène.

7. Composition de résine thermoplastique selon l'une quelconque des revendications 1 à 3, dans laquelle la composition de résine thermoplastique présente un pourcentage d'allongement qui est supérieur à celui de la résine thermoplastique de 30 % ou plus ; dans laquelle le pourcentage d'allongement étant la valeur absolue de l'augmentation du pourcentage d'allongement calculée en soustrayant la valeur d'allongement soit de la résine thermoplastique soit de la composition sans le polymère de la valeur d'allongement de la composition de résine plastique.

8. Produit moulé obtenu à partir de la composition de résine thermoplastique selon l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55160045 A

- JP 2000178432 A